(19) Europäisches Patentamt

European Patent Office

Office européen des brevets

(11) EP 4 667 276 A1

(12) EUROPEAN PATENT APPLICATION

(43) Date of publication:
24.12.2025 Bulletin 2025/52

(21) Application number: 24305964.9

(22) Date of filing: 19.06.2024

(51) International Patent Classification (IPC):
B60L 15/32 (2006.01)    B61L 27/12 (2022.01)
H02J 3/00 (2006.01)

(52) Cooperative Patent Classification (CPC):
B60L 15/32; B61L 27/12; B61L 27/16; H02J 3/003;
B60L 2200/26; B60L 2240/80; B60L 2260/54;
B60L 2260/58

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ALSTOM Holdings
93400 Saint-Ouen-sur-Seine (FR)

(72) Inventors:
• CHIEGO, Giampaolo
  92250 LA GARENNE COLOMBES (FR)

• ROQUES, Julien
  17220 CLAVETTE (FR)
• AUTHIE, Pierre
  78170 LA CELLE SAINT CLOUD (FR)
• SAIAH, Kenza
  93400 SAINT OUEN SUR SEINE (FR)
• DAUNES, Guillaume
  69100 VILLEURBANNE (FR)

(74) Representative: Plasseraud IP
104 Rue de Richelieu
CS92104
75080 Paris Cedex 02 (FR)

(54) **METHOD FOR CONTROLLING A FLEET OF RAILWAY VEHICLES, COMPUTER PROGRAM PRODUCT, COMPUTER READABLE MEDIUM, CONTROLLER AND TRANSPORT NETWORK**

(57) The invention relates to a method for controlling a fleet of railway vehicles circulating along two tracks, the railway vehicles circulating on one track, respectively the other track, forming a first half-fleet, respectively a second half-fleet, the method comprising the steps of:
- collecting parameters, to obtain collected parameters,
- calculating an electrical power profile of a railway vehicle in function of the collected parameters, to obtain a calculated electrical power profile over the operation period for each railway vehicle;
- deducing an electrical power profile of each half-fleet over a period, based on the calculated electrical power profiles, to obtain deduced electrical power profiles,
- optimizing the starting times of each railway vehicle to fulfill at least one criteria, one criteria being the minimization of the energy consumption of the railway vehicles and implying the deduced electrical power profiles.

FIG.4

Processed by Luminess, 75001 PARIS (FR)

**Description**

The present invention concerns a method for controlling a fleet of railway vehicles, in particular in a driverless metro system. The present invention also relates to associated devices, namely a computer program product, a computer readable medium, a controller and a transport network comprising such a controller.

The transport network comprises at least two railway tracks, at least one railway vehicle on each track and an electrical system. The railway vehicles move on the tracks between two terminuses. The railway vehicles consume electrical power to move on the track for accelerating but is able to provide energy when braking.

It is therefore desirable to reduce the electrical consumption and notably reuse the energy lost during braking.

It is known from document EP 3099553 A to find in real time an optimization of the energy consumption by synchronizing locally the acceleration and the braking of the railway vehicles of the transport network.

However, in practice, such optimization is cumbersome and could not lead to an optimized energy consumption of the fleet.

There is therefore a need for a method for controlling a fleet of railway vehicles, which is easier to carry out and provides with a better optimization of the energy consumption of the fleet.

To this end, the specification describes a method for controlling a fleet of railway vehicles circulating along two tracks in a line of a transport network, the railway vehicles circulating on one track forming a first half-fleet and the railway vehicles circulating on the other track forming a second half-fleet, the method being computer-implemented and comprising the steps of:

- collecting parameters, to obtain collected parameters, the collected parameters comprising at least one parameter relative to the transport network and at least one operating parameter of the transport network during an operation period of the fleet,
- calculating an electrical power profile of a railway vehicle of the transport network in function of the collected parameters, to obtain a calculated electrical power profile over the operation period for each railway vehicle (11), an electrical power profile being the temporal evolution of the electrical power over a time interval,
- deducing an electrical power profile of each half-fleet (16, 18) over a period, based on the calculated electrical power profiles, to obtain deduced electrical power profiles,
- optimizing the starting times of each railway vehicle circulating along the track to fulfill at least one criteria, one criteria being the minimization of the energy consumption of the railway vehicles and implying the deduced electrical power profiles.

Thanks to the invention, in particular thanks to the calculating of optimized timetable, the invention optimizes the energy consumption of the fleet by optimizing the fleet journey to reuse energy of the railway vehicles during the operation.

According to further aspects of the method t, which are advantageous but not compulsory, the method to optimize the energy consumption of a transport network might incorporate one or several of the following features, taken in any technically admissible combination:

- the collected parameters comprising parameters relative to the transport network, the parameters relative to the transport network comprise at least one parameter relative to the line and at least one parameter relative to the railway vehicles,
- the collected parameters relative to the transport network are only relative to the line or to the railway vehicles,
- the collected parameters comprising parameters relative to the transport network, the parameters relative to the transport network are chosen in the list of a gradient of the line, a railway vehicle efficiency, a railway vehicle tare mass, a rotating mass of the railway vehicle and a resistance to motion of the railway vehicle,
- the at least one operating parameter of the transport network is chosen in the list of a passenger mass of each railway vehicle, a speed profile of the railway vehicles, a number of railway vehicles, a time intervals between the railway vehicles, a journey time between two stations of the line and a stopping time at stations of the line,
- during the step of calculating, for at least one railway vehicle, the electrical power profile of said railway vehicle is calculated with the equations of dynamics, the equations of dynamics being expressed with the acquired parameters,
- the equations of dynamics are the following equations:

$$F(t, x, v) = (M_s + M_r) * a(t) + M_s * g * \frac{gradient(x)}{1000} + RTM(v)$$

$$P_{meca}(t) = F(t) * v(t)/3,6$$

$$P_{elec\,(t)} = \begin{cases} \dfrac{P_{meca}\,(t)}{\eta} + P_{aux}(t)\ if\ P_{meca} \geq 0 \\ P_{meca}(t) * \eta + P_{aux}(t)\ if\ P_{meca} < 0 \end{cases}$$

where:

- $F(t, x, v)$ : force applied on the railway vehicle expressed in newton,
- $v$ : speed of the railway vehicle expressed in kilometer per hour,
- $x$ : position of the railway vehicle expressed in kilometer,
- $t$ : time expressed in second,
- $M_s$ : static mass of the railway vehicle expressed in kilogram,
- $M_r$ : rotative mass of the railway vehicle expressed in kilogram,
- a : acceleration of the railway vehicle expressed in meter per second squared,
- g : gravitational constant expressed in meter per second squared,
- $gradient(x)$ : altimetric profile of the line, (in per thousand)
- $RTM(v)$ : driving resistance to motion applied on the railway vehicle expressed in newton,
- $P_{meca}(t)$ : mechanical power of the railway vehicle expressed in watt,
- $P_{elec}(t)$ : electrical power of the railway vehicle expressed in watt,
- $\eta$ : efficiency coefficient, and
- $P_{aux}(t)$ : auxiliary power of the railway vehicle expressed in watt,

- during the step of calculating, one electrical power profile of one railway vehicle is calculated, to obtain an electrical power profile reference, the other electrical power profile of the railway vehicles being obtained by time-shifting the electrical power profile reference by a time offset, the time offset being the time interval between the railway vehicles for which the electrical power profile is calculated and the railway vehicle corresponding to the electrical power profile reference,
- during the step of deducing, the electrical power profile of each half-fleet is obtained by adding the electrical power profile of each railway vehicle of each half-fleet,
- during the step of optimizing, an optimisation variable is used to fulfil the criteria, the optimisation variable being the time shift between the electrical power profile of the first half-fleet with respect to the electrical power profile of the second half-fleet,
- during the step of optimizing, two criteria are fulfilled, the first criteria being the minimization of the energy consumption of the railway vehicles and the second criteria being fulfilling operating constraints,
- the minimization of the energy consumption of the railway vehicles is carried out by minimizing the integral of the positive part of the deduced power profile of the whole fleet over the headway.

The specification further concerns a computer program product comprising a computer readable medium, having thereon a computer program comprising program instructions, the computer program being loadable into a processing unit and adapted to cause execution of a method as defined above when the computer program is run by the parameter processing unit.
The specification further concerns a computer readable medium having encoded thereon a computer program as defined above.
The specification further concerns a controller adapted to control a fleet of railway vehicles circulating along two tracks in a line of a transport network, the railway vehicles circulating on one track forming a first half-fleet and the railway vehicles circulating on the other track forming a second half-fleet, the controller being adapted to:

- collect parameters, to obtain collected parameters, the collected parameters comprising at least one parameter relative to the transport network and at least one operating parameter of the transport network during an operation period of the fleet,
- calculate an electrical power profile of a railway vehicle of the transport network in function of the collected parameters, to obtain a calculated electrical power profile over the operation period for each railway vehicle, an electrical power profile being the temporal evolution of the electrical power over a time interval,
- deduce an electrical power profile of each half-fleet over a period, based on the calculated electrical power profiles, to obtain deduced electrical power profiles,
- optimize the starting times of each railway vehicle circulating along the track to fulfill at least one criteria, one criteria being the minimization of the energy consumption of the railway vehicles and implying the deduced electrical power profiles.

The specification further concerns a transport network comprising two railway tracks, at least one railway vehicle on each track, an electrical system to supply the transport network and a controller as defined above.

The invention will be better understood on the basis of the following description, which is given in correspondence with the annexed figures and as an illustrative example, without restricting the object of the invention. In the annexed figures:

- Figure 1 shows a transport network according to an embodiment of the specification,
- Figure 2 shows two railway vehicles of the transport network of the figure 1, which are braking,
- Figure 3 shows the railway vehicles of the figure 2, one railway vehicle is breaking and one railway vehicle is moving forward,
- Figure 4 illustrates a flowchart of an example of carrying out a method for optimizing the energy consumption of the transport network of the figure 1,
- Figure 5 shows the power and the speed of one of the railway vehicle of the figure 2 as a function of time,
- Figure 6 shows the power demand of a first half-fleet travelling on the first track 2 of the transport network of the figure 1 as a function of time,
- Figure 7 shows the power demand of a second half-fleet travelling on the second track 3 of the transport network of the figure 1 as a function of time,
- Figure 8 shows the optimized superposition with a time offset of the powers of the figures 6 and 7,
- Figure 9 shows the total power demand of a fleet travelling on the transport network of the figure 1 as a function of time, and for the optimized time shift,

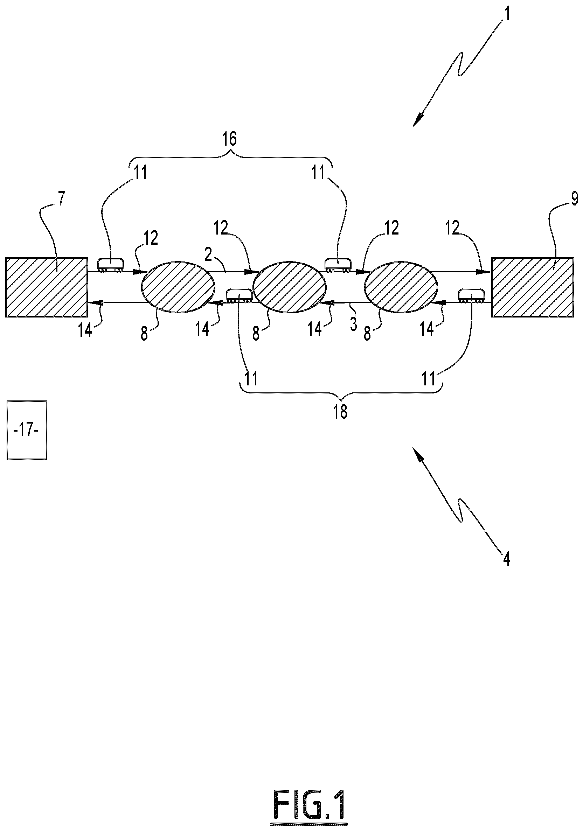

A transport network 1 is represented on figures 1, 2 and 3.

The transport network 1 comprises a first railway track 2 and a second railway track 3, which are part a line 4, an electrical system 5, a fleet 10 of several railway vehicles 11 and a controller 17.

For simplicity, the first railway track 2 and the second railway track 3 are simply named first track 2 and second track 3.

The transport network 1 extends on a geographical area and enable users of the transport network 1 to move within this area.

For instance, the transport network 1 is a subway network; in this case, the railway vehicles 11 are metros.

The line 4 extends between a first terminus 7 and a second terminus 9 between which railway vehicles 11 circulate.

According to the example of figure 1, the itinerary between both terminus 7 and 9 is defined and fixed.

More precisely, the line 4 comprises, between the first terminus 7 and the second terminus 9, several stations 8 in which each railway vehicle 11 moving on the line 4 stops to allow users to get on and off the railway vehicle 11.

On both railway tracks 2 and 3, the railway vehicles 11 of the fleet 10 run being spaced out by a constant time interval called headway. In other words, the headway corresponds to the time interval between the arrival of a railway vehicle 11 on the first or second track 2 or 3 in a station and the arrival of the following railway vehicle 11 on the same track in the same station.

The total number of railway vehicles 11 of the fleet 10 in operation depends of the headway and the round trip journey time of the line 4.

The round trip journey time of the line 4 corresponds to the time interval between the arrival of a railway vehicle 11 on the first or second track 2 or 3 in a station and the arrival of the same railway vehicle 11 on the same track in the same station after the railway vehicle 11 has travelled the line 4.

In this example, the line 4 comprises three stations 8.

The first track 2 connects the first terminus 7 of line 4 to the second terminus 9 of the line 4.

This means that the first track 2 defines a first direction of circulation indicated by the arrows 12 on figure 1.

A railway vehicle 11 circulating on the first track 2 therefore starts from the first terminus 7 passes through the three stations 8 and arrives to the second terminus 9.

The set of railway vehicles 11 of the fleet 10, which circulates on the first track 2 during the operation, forms a first half-fleet 16. In this case, the half of the number of railway vehicles 11 of the fleet 10 circulating on the line 4 forms the first half-fleet 16. The number of railway vehicles 11 forming the first half-fleet 16 is equal to the integer part of the division of the journey time on track 2 between both terminus by the headway plus one.

The second track 3 connects the terminus 7 and 9 but on the other direction of circulation as indicated by the arrows 14 of figure 1.

A railway vehicle 11 circulating on the second track 3 therefore starts from the second terminus 9 passes through the three stations 8 and arrives to the first terminus 7.

The set of railway vehicles 11 of the fleet 10, which circulates on the second track 3 during the operation period, forms a second half-fleet 18.

In this case, the railway vehicles 11 of the fleet 10 not forming the first half-fleet 16 form the second half-fleet 18. The number of railway vehicles 11 forming the second half-fleet 18 is equal to the number of railway vehicles of the fleet 10 minus the number of railway vehicles 11 forming the first half-fleet 16.

The first and the second half-fleet 16 and 18 form the whole fleet 10.

The electrical system 5 supplies the network with electrical energy.

Advantageously, the electrical system 5 uses direct current.

The railway vehicle regenerates electrical power when it brakes. The electrical system 5 does not include a reversible converter so that the electrical system 5 is not able to reuse or store energy from the braking of railway vehicles 11.

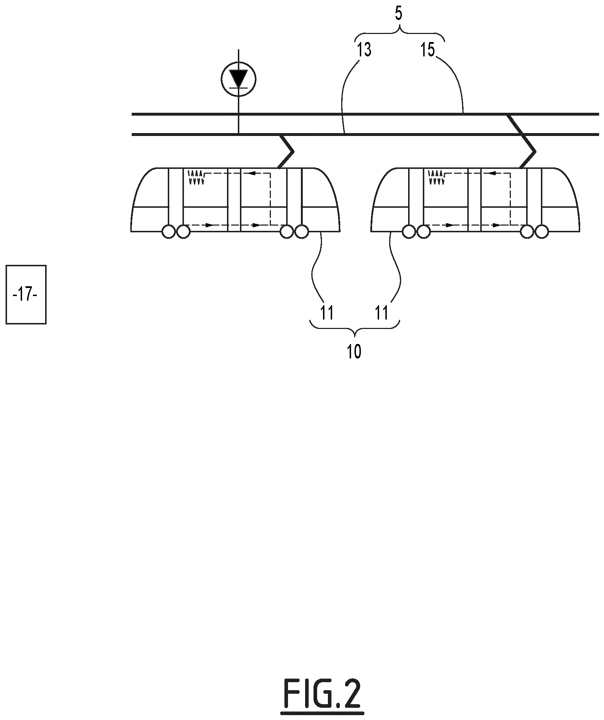

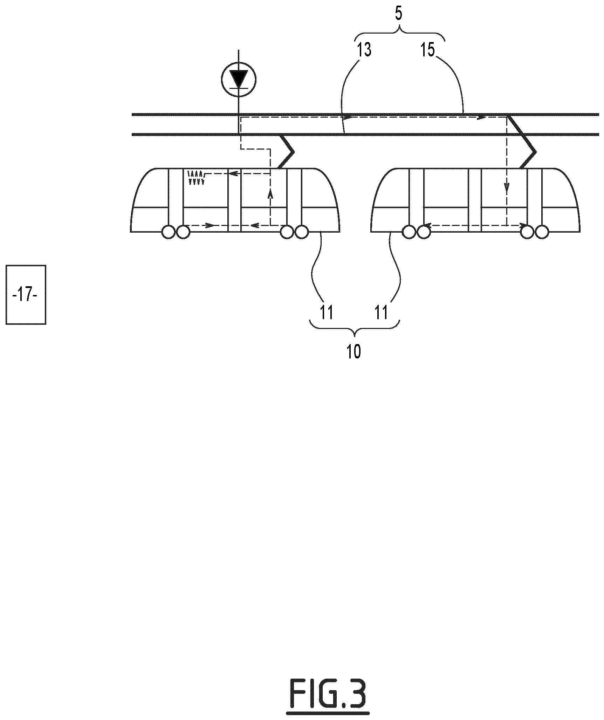

As shown on figure 2 and 3, the electrical system 5 comprises a first positive circuit 13 suppling the first track 2 and a second positive circuit 15 suppling the second track 3.

The first positive circuit 13 and the second positive circuit 15 are linked together in order to share power demand.

In the example of the figure 2, both railway vehicles 11 brake and the electrical power created by the braking is dissipated by railway vehicles 11 through electrical resistances when no other vehicle demands power at this time. The energy of the braking is lost.

In the example of the figure 3, the railway vehicle 11 on the first track 2 brakes and the railway vehicle 11 on the second track 3 moves forward and needs power. The electrical power created by the braking of the railway vehicles 11 on the first track 2 can be transmitted to the railway vehicles 11 on the second track 3 to move forward.

Thus, when a railway vehicle 11 needs energy at the same time another railway vehicle 11 brakes, the energy of the braking can be reused to move forward the railway vehicle 11.

In general terms, the railway vehicle 11 comprises wheels in order to roll on the first and second track 2 and 3 and at least one passenger coach.

The railway vehicle 11 also comprises a traction system to propel the railway vehicle 11 in the first and second track 2 and 3. The traction system is supplied in energy by the electrical system 5.

The railway vehicle 11 comprises on-board auxiliaries, which are supplied in energy by the electrical system 5 and by the braking energy. The on-board auxiliaries manage various services of the vehicle such as opening and closing of the doors and the heating, ventilation or lighting of the at least one passenger coach.

The transport network 1 comprises a controller 17 adapted to carry out a method for controlling, such method being thus a computer-implemented method.

Such controller 17 may be separated from the automated train system or being part of the automated train system.

As a specific example, the controller 17 is a computer, such as a laptop.

More generally, the controller 17 is a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The controller 17 comprises a processor, a keyboard and a display unit.

The processor comprises a parameter-processing unit, memories and a reader. The reader is adapted to read a computer readable medium.

The computer program product comprises a computer readable medium.

The computer readable medium is a medium that can be read by the reader of the processor. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the parameter-processing unit and adapted to perform execution of the method to optimize the energy consumption of a transport network 1 when the computer program is run by the parameter-processing unit.

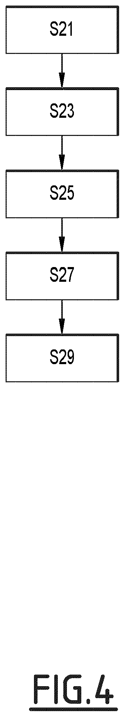

An example of operating of the controller 17 is now described in reference to figure 4, which are a flowchart of an example of carrying out a method for controlling a fleet 10 of railway vehicles 11.

The method for controlling aims at obtaining an optimized timetable from a starting timetable.

A starting timetable associates randomly to each journey of a railway vehicle 11 its starting time at the terminus.

For the case of a journey on the first track 2, the starting time is the time at which the railway vehicle 11 leaves the first terminus 7.

Similarly, for the case of a journey on the second track 3, the starting time is the time at which the railway vehicle 11 leaves the second terminus 9.

It should be understood that following the starting timetable results in the existence of a waiting time for each railway vehicle 11 at each terminus, in the process of reversing the vehicle direction in the terminus. This waiting time is specific for each journey and each terminus.

The method for controlling aims at determining the most appropriate waiting time that in turn fixes a starting time at terminus, for each journey.

The most appropriate is here the waiting time at terminus, which enables to reduce energy consumption of the transport network 1.

Notably, as explained before, when a railway vehicle 11 brakes, it is favorable that another railway vehicle 11 demands power at the same time. This requires an appropriate synchronization along the different journeys.

According to the example of figure 4, the method for controlling comprises a step of collecting S21, a step of calculating S23, a step of deducing S25, a step of optimizing S27 and a step of controlling S29.

During the step of providing S21, the controller 17 collects several input parameters.

For this, according to the case, the controller 17 receives said parameters, for instance by reading a memory or obtains the parameters by requesting a measurement.

As particular example of the first case, the parameters are inputted by the user or is taken in a database already established.

For the second case, the parameters are collected in real time by one or several sensors, which communicate with the controller 17.

The input parameter comprises at least one parameter relative to the transport network 1 and at least one operating parameter of the transport network 1 during the operation period of the fleet 10.

A parameter relative to the transport network 1 is to be understood as a structural parameter, in the sense that the parameter is invariable.

Indeed, such parameter relative to the transport network 1 do not vary from one journey to another.

In other words, whether or not the transport network 1 is operated does not change the value of the parameter.

In the present case, the parameter relative to the transport network 1 comprises at least one parameter relative to the line 4 and at least one parameter relative to the railway vehicles 11.

In the example, the parameters relative to the transport network 1 selected to be provided are only relative to the line 4 or to the railways vehicles 11.

The gradient of the line 4 is an example of parameter relative to the line 4. The gradient of the line 4 is the altimetry profile of the line 4. The gradient of the line is measured with the altimetry of each point of the first and second track 2 and 3.

The gradient of the line 4 is the same on the first and second track 2 and 3 when the first and second track 2 and 3 are positioned side by side.

The gradient of the line 4 could be different on the first track 2 and on the second track 3. For instance, to optimize the space in some portion of the line 4, the second track 3 is above the first track 2 so that the second track 3 presents more altimetry variation.

Examples of parameter relative to the railway vehicles 11 are the tare mass of railway vehicles 11, the rotative mass of railway vehicles 11, the resistance to motion of railway vehicles 11, the efficiency of the traction power chain and the average consumption of the on-board auxiliaries.

The tare mass of the railway vehicle 11 is the mass of the railway vehicle without passengers.

The rotative mass of railway vehicles 11 is the additional mass to add to tare mass to include the inertia of the elements of the railway vehicle 11, which are in rotation when the railway vehicle 11 moves forward.

The resistance to motion corresponds to the force resulting from mechanical and aerodynamical friction.

The efficiency of the traction power chain is calculated from the measure of the motor output mechanical power and the measure of the traction input electric power. In this case, the efficiency of the traction power chain, during traction phase, is equal to the motor output mechanical power divided by the measure of the input electric power. When in braking phase, efficiency is equal to electric power regenerated by the motor divided by mechanical braking power at wheels.

By contrast, with the parameter relative to the transport network 1, an operating parameter is variable, meaning that the corresponding parameters can be varied easily from one journey to another.

This means that the parameters may vary from one operation period to another operation period.

The operation period depends from the context.

As an example, the operation period is one day.

In variant, the operation period is longer, for example one week or one month.

Examples of operating parameters are the numbers of railway vehicles 11 circulating on the line 4, the passenger mass of each railway vehicle 11, the headway, the speed profile of the railway vehicles 11 between the stations 8, the journey time between two stations 8 of the line 4 or the stopping time at the stations 8.

The speed profile of the railway vehicles 11 corresponds to the variation versus time of the speed of the railway vehicles 11. For instance, the speed of the railway vehicles 11 could be calculated with the rotation speed of the wheels of the railway vehicle 11 measured with a rotation sensor. It also could be imported as input data from an external source taking into account the performance of railway vehicle 11, the signaling safety constraints, the characteristics of the line 4 and some regulation margins.

The journey time between two consecutive stops, which could be stations 8 or terminus 7 or 9 is measured between the moment when the railway vehicle 11 leaves a stop and the moment when the railway vehicle 11 arrives in the next stop.

The stopping time at the stations 8 is measured between the moment when the railway vehicle 11 arrives in the station 8 or terminus 7 or 9 and the moment when the railway vehicle 11 leaves the station 8 or terminus 7 or 9.

At the end of the step of collecting S21, the controller 17 has at least one parameter relative to the transport network 1 and at least one operating parameter.

In the present case, it is assumed that the controller 17 has the tare mass of railway vehicles 11, the rotative mass of railway vehicles 11, the resistance to motion of railway vehicles 11, the efficiency of the traction power chain, the average consumption of the on-board auxiliaries, the gradient of the line 4, the number of railway vehicles 11, the passenger mass, the headway, the speed profile of the railway vehicles 11 between the stations 8, the journey time between two stations 8 of the line 4 and the stopping time at the stations 8.

During the step of calculating S23, the controller 17 calculates a reference electrical power profile for at least one railway vehicle 11 of the transport network 1. It is to be understood that a power profile corresponds to an evolution of the electrical power versus time.

The electrical power profile of a railway vehicle 11 is here the temporal evolution of the electrical power of said railway vehicle 11 over the operating period.

For this, the controller 17 uses the collected parameters and obtains said electrical power profile.

An example of implementation of such step of calculating S23 is now detailed.

The controller 17 calculates the electrical power profile of a railway vehicle 11 during its journey on the first track 2 from the first terminus 7 to the second terminus 9. Such calculation is based on the acquired parameters.

In the present example, the controller 17 calculates the electrical power profiles by using dynamics equations describing the energy exchanges in the railway vehicle 11.

More specifically, the controller 17 obtains the electric power profile of a railway vehicle 11 in function of other parameters by isolating it in the dynamics equations.

One expression of such dynamics equations correspond to the following system of equations:

$$F(t, x, v) = (M_s + M_r) * a(t) + M_s * g * \frac{gradient(x)}{1000} + RTM(v)$$

$$P_{meca}(t) = F(t) * \frac{v(t)}{3,6}$$

$$P_{elec\,(t)} = \begin{cases} \dfrac{P_{meca}(t)}{\eta} + P_{aux}(t) \; if \; P_{meca} \geq 0 \\ P_{meca}(t) * \eta + P_{aux}(t) \; if \; P_{meca} < 0 \end{cases}$$

Where:

- $F(t, x, v)$ : tractive/braking force applied at wheels on the railway vehicle 11 expressed in newton,
- $v$ : speed of the railway vehicle 11 expressed in kilometer per hour,
- $x$ : position of the railway vehicle 11 expressed in kilometer,
- $t$ : time expressed in second,
- $M_s$ : static mass of the railway vehicle 11 expressed in kilogram,
- $M_r$ : rotative mass of the railway vehicle 11 expressed in kilogram,
- $a$ : acceleration of the railway vehicle 11 expressed in meter per second squared,
- g: gravitational constant expressed in meter per second squared,
- $gradient(x)$ : altimetric profile of the line 4 (in per thousand),
- $RTM(v)$ : driving resistance to motion applied on the railway vehicle 11 expressed in newton,
- $P_{meca}(t)$ : mechanical power of the railway vehicle 11 expressed in watt,

- $P_{elec}(t)$ : electrical power of the railway vehicle (11) expressed in watt,
- $\eta$ : efficiency coefficient,
- $P_{aux}(t)$ : auxiliary power of the railway vehicle 11 expressed in watt.

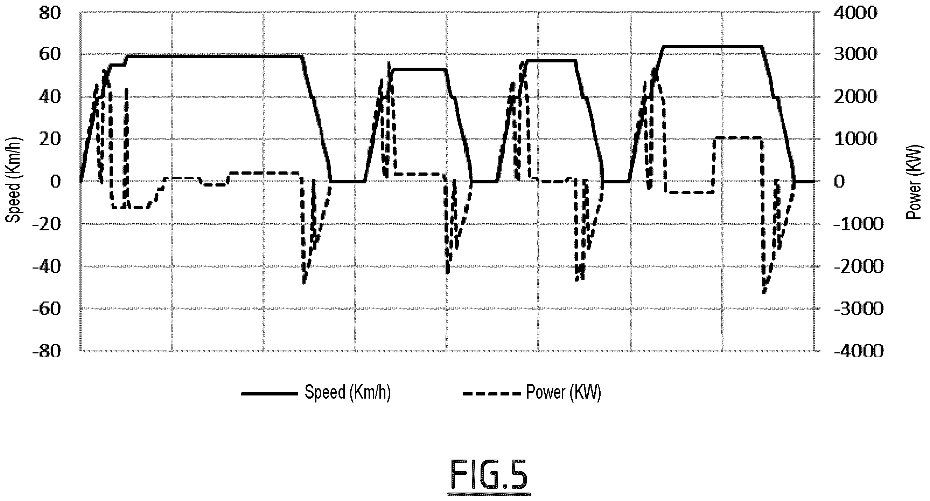

An example of result of the calculation of the electrical power profile of a railway vehicle 11 is represented in figure 5, in which the reference electrical power of the railway vehicle 11 is graphically represented versus time, and corresponding to the reference electrical power profile.

In this figure, the negative power corresponds to the power generated sent back to the electrical system 5 when the railway vehicle 11 brakes, assuming consumer trains always exist.

For each railway vehicle 11 of the first half-fleet 16, the electrical power profile is obtained by time-shifting the reference electrical power profile by a time offset. The time offset is the time interval between the railway vehicles 11, on the first track 2, as per the operating parameter considered above.

In particular, by considering that the time t started from zero when a first railway vehicle 11 leaves the first terminus 7 to start its journey on the first track 2 and by considering the time interval Ti between the start of the first railway vehicle 11 on the first track 2 and the start of a second railway vehicle 11 on the first track 2, the electrical power of the second railway vehicle 11 at time t, is equal to the electrical power of the first railway vehicle 11 at the same time t advanced by the headway.

Mathematically, this means that the electrical power of the first railway vehicle 11 $P_{elec\_1}$ and the electrical power of the second railway vehicle 11 $P_{elec\_2}$ follow the following equation: $P_{elec\_1}(t - Ti) = P_{elec\_2}(t)$

Then, the controller 17 calculates the electric power $Pelec(t)$ of a railway vehicle 11 during its journey on the second track 3 from the second terminus 9 to the first terminus 7 with the same equations as the equations for a railway vehicle 11 on first track 2. Indeed the calculator uses the same equations but some parameters, such as the gradient, change for the journey on the second track 3.

As before, all the electrical power profiles of railway vehicles 11 of the second half-fleet 18 are identical and time-shifted with a time offset, which corresponds to the time interval between railway vehicles 11 of the second half-fleet 18.

At the end of the step of calculating S23, the controller therefore has the electrical power profiles of all the railways vehicles 11 of the fleet 10.

During the step of deducing S25, the controller 17 deduces the electrical power profiles $P_{elec\_V1}(t)$ and $P_{elec\_V2}(t)$ of each half-fleet 16 and 18 respectively based on the calculated electrical powers profiles of the railway vehicles 11.

Due to the cyclic movement of the railway vehicles 11, the electrical power profiles are periodic with a period, which correspond to the time interval between railway vehicles 11, also called headway. The electrical power variation is only calculated over a periodic time interval corresponding to the headway between railway vehicles 11.

The electrical power profile of a half-fleet 16 and 18 is thus here the temporal evolution of the electrical power of said half-fleet 16 and 18 over said period.

Thus, more generally, the electrical power profile of an element is the temporal evolution of the electrical power of said element over a given time period.

Hereinafter, for a better readiness, the electrical power profile of the first half-fleet 16 is named first electrical power $P_{elec\_V1}(t)$ whereas the electrical power profile of the second half-fleet 18 is named second electrical power $P_{elec\_V2}(t)$.

Concerning the first electrical power $P_{elec\_V1}(t)$, the controller 17 obtains this function by implementing the addition of the electrical power profile of each railway vehicle 11 of the first half-fleet 16, over the same periodic time interval.

Mathematically, this means that the controller 17 implements the following operation:

$$P_{elec\_V1}(t) = \sum_{j=1}^{n1} Pelec\,(j,t)\,_{V1}$$

Where:

$n1$ : number of railway vehicles 11 of the fleet 10 forming the first half-fleet 16,
$Pelec\,(j,t)$ : electrical power of the railway vehicle j expressed in watt.

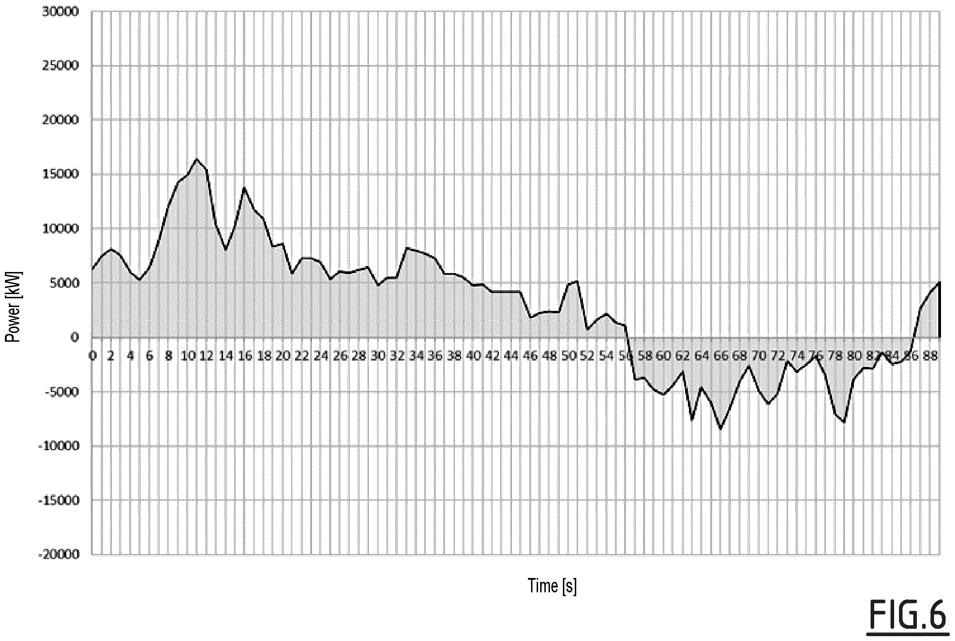

An example of first electrical power $P_{elec\_V1}(t)$ is graphically represented on figure 6.

Concerning the second electrical power $\bar{P}_{elec\_V2}(t)$, the controller 17 obtains this function by implementing the addition of the electrical power profile of each railway vehicle of the first half-fleet 16.

Mathematically, this means that the controller 17 implements the following operation:

$$P_{elec\_V2}(t) = \sum_{j=n1+1}^{n} Pelec\,(j,t)\,_{V2}$$

Where:

- $n$ : number of railway vehicles 11 of the fleet 10,
- $n1$ : number of railway vehicles 11 of the fleet 10 forming the second half-fleet 18,
- $Pelec\,(j,\,t)$ : electrical power of the railway vehicle j.

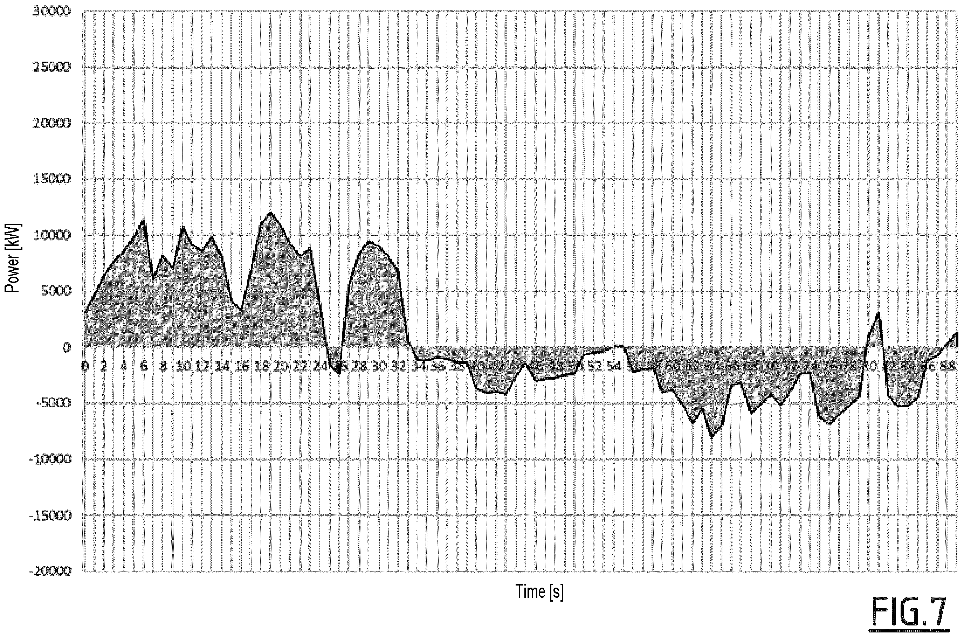

An example of second electrical power $P_{elec\_V2}(t)$ is graphically represented on figure 7.

At the end of the step of deducing S25, the controller 17 has the electrical power of the first half-fleet 16 and the electrical power of the second half-fleet 18.

During the step of optimizing S27, the controller 17 searches the optimized starting times of each railway vehicles 11 fulfilling at least one criteria.

One criteria is the minimization of energy consumption of the railway vehicles 11 on the basis of the deduced electrical power profile of the first half-fleet 16 and the electrical power profile of the second half-fleet 18.

Such minimization is based on the first electrical power $P_{elec\_V1}(t)$ and the calculated second electrical power $P_{elec\_V2}(t)$.

An optimisation variable used to fulfil the criteria is the time shift between the electrical power profile of the first half-fleet 16 with respect to the electrical power profile of the second half-fleet 18.

Operating constraints such as the minimum duration to reverse railway vehicles 11 in terminus 7 and 9 are criteria taken into account.

An operational constraint is expressed by the layover time, which results from the fact that the total journey time including journey times between stations, plus stopping times, plus time to reverse the vehicle in both terminus is lower than operational round trip journey time, that must be a multiple of the headway Tj (operational round trip journey time = n $\times$ Tj, n being the number of vehicles of the fleet). Layover time is a time margin to be shared among the waiting times in both terminus. The time shift between tracks results from the sharing of the layover time. The time shift also represents the time difference between two successive starting times at opposite terminus 7 and 9. The time shift has no impact on the railway operation of the line 1.

The controller 17 creates initial timetable considering the operating constraints.

The controller 17 deduces the electrical power profile of the whole fleet 10 over the headway. Indeed the electrical power profile over a headway is the addition of the electrical power profile of the first half-fleet 16 and the electrical power profile of the second half-fleet 18.

The controller 17 determines an optimal time shift, which minimizes the electrical power of the whole fleet 10.

The optimal time shift corresponds to the phase shifting between the electrical power profile of the first half-fleet 16 and the electrical power profile of the second half-fleet 18 that minimizes the electrical power profile of the whole fleet 10.

The controller 17 deduces the optimized starting times in terminus 7 and 9 based on the optimal feasible time shift. Indeed the optimal time shift takes into account the waiting time a railway vehicle 11 stays at the first terminus 7, respectively the second terminus 9, before to go on the first railway track 2, respectively the second track 3.

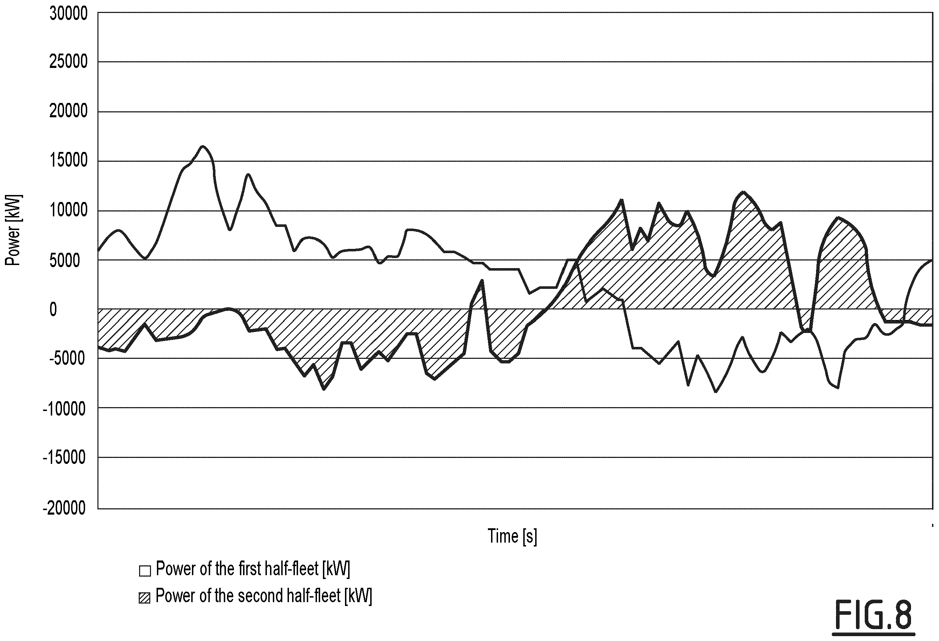

To find the optimal time shift, the controller 17 superimposes and adds the electrical power profile of the first half-fleet 16 and electrical power profile of the second half-fleet 18 as shown on figure 8, introducing a variable time shift. The controller 17 determines the optimal time shift, by shifting the phase of the electrical power profile of the first track 2 with respect to the electrical power profile of the second track 3 to determine the optimal time shift that optimizes the energy exchanges between the two tracks at a global level and minimizes the quantity of negative power generated by the whole fleet. By minimizing the quantity of negative power generated by the fleet, the optimal time shift minimizes the electrical power demand of the whole fleet 10 by allowing the maximal reuse of the energy of braking.

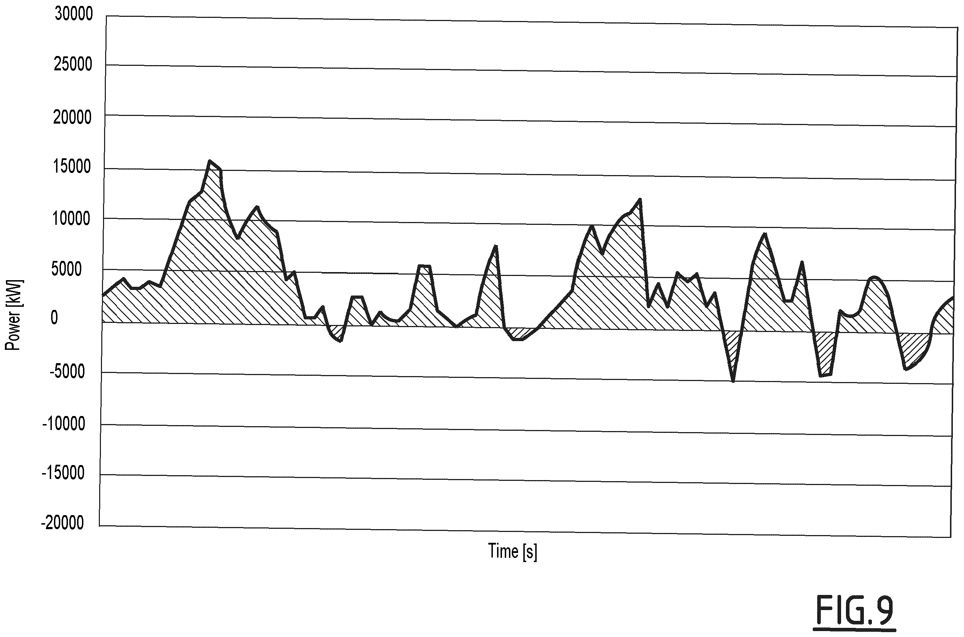

In mathematic terms, the optimal time shift of each railway vehicle 11 circulating along the line 4 minimizes the integral of the positive part of the deduced electrical power profile of the whole fleet 10 over the headway, shown on figure 9. The positive part of the deduced electrical power profile of the whole fleet 10 corresponds to the part of the deduced electrical power profile of the whole fleet 10 where the deduced electrical power is positive.

During the step of controlling S29, the controller 17 communicates orders to control the railway vehicles 11. For instance, the controller communicates to the railway vehicles 11 stopped at the first and second terminus 7 and 9 their next starting time.

The method requires a simple and fast technique to be set up, so that the set-up of the method does not requires energy expertise for the operators.

Moreover, the method gives a global view of the energy consumption allowing a better optimization of the consumption. Indeed the method does not consider individually each railway vehicles 11 to minimize individually the consumption of each railway vehicle 11. The method considers the consumption of the fleet 10 in its entirety and minimizes the electrical power demand of the whole fleet 10 over the headway.

The method is thus easier to carry out and provides with a better optimization of the energy consumption of the fleet.

Other implementations of the method may be considered.

As an alternative, the method can find the best time shift, which minimizes the electrical power of the fleet 10 and, if the optimized starting time deduced from this best time shift does not respect the operating constraints, notifies that the fleet 10 needs an additional railway vehicle 11 or set another feasible time shift, if any, minimizing the fleet consumption. The method can evaluate the energy consumption of the railway line for a multiple headways, running profiles and journey time configurations.

Since the method is compatible with any type of architecture of transport network, other transport network 1 may be considered here.

As an alternative, the method determines the global electric power demand with other formula.

As a specific example, the previous equations of dynamics can either be simplified by neglecting some terms or other terms could be added to adapt properly to the physical situation, notably by modifying the accuracy.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A method for controlling a fleet (10) of railway vehicles (11) circulating along two tracks (2, 3) in a line (4) of a transport network (1), the railway vehicles (11) circulating on one track (2) forming a first half-fleet (16) and the railway vehicles (11) circulating on the other track (2) forming a second half-fleet (18), the method being computer-implemented and comprising the steps of:

   - collecting parameters, to obtain collected parameters, the collected parameters comprising at least one parameter relative to the transport network (1) and at least one operating parameter of the transport network (1) during an operation period of the fleet (10),
   - calculating an electrical power profile of a railway vehicle (11) of the transport network (1) in function of the collected parameters, to obtain a calculated electrical power profile over the operation period for each railway vehicle (11), an electrical power profile being the temporal evolution of the electrical power over a time interval,
   - deducing an electrical power profile of each half-fleet (16, 18) over a period, based on the calculated electrical power profiles, to obtain deduced electrical power profiles,
   - optimizing the starting times of each railway vehicle (11) circulating along the track to fulfill at least one criteria, one criteria being the minimization of the energy consumption of the railway vehicles (1) and implying the deduced electrical power profiles.

2. The method according to claim 1, wherein the collected parameters comprising parameters relative to the transport network (1), the parameters relative to the transport network (1) comprise at least one parameter relative to the line (4) and at least one parameter relative to the railway vehicles (11).

3. The method according to claim 2, wherein the collected parameters relative to the transport network (1) are only relative to the line (4) or to the railway vehicles (11)

4. The method according to any one of the claims 1 to 3, wherein the collected parameters comprising parameters relative to the transport network (1), the parameters relative to the transport network (1) are chosen in the list of a gradient of the line (4), a railway vehicle (11) efficiency, a railway vehicle (11) tare mass, a rotating mass of the railway vehicle (11) and a resistance to motion of the railway vehicle (11).

5. The method according to any one of the claims 1 to 4, wherein the at least one operating parameter of the transport network (1) is chosen in the list of a passenger mass of each railway vehicle (11), a speed profile of the railway vehicles (11), a number of railway vehicles (11), a time intervals between the railway vehicles (11), a journey time between two stations (8) of the line (4) and a stopping time at stations (8) of the line (4).

6. The method according to any one of the claims 1 to 5, wherein, during the step of calculating, for at least one railway vehicle (11), the electrical power profile of said railway vehicle (11) is calculated with the equations of dynamics, the equations of dynamics being expressed with the acquired parameters.

7. The method according to the claim 6, wherein the equations of dynamics are the following equations:

$$F(t, x, v) = (M_s + M_r) * a(t) + M_s * g * \frac{gradient(x)}{1000} + RTM(v)$$

$$P_{meca}(t) = F(t) * v(t)/3,6$$

$$P_{elec\,(t)} = \begin{cases} \dfrac{P_{meca}\,(t)}{\eta} + P_{aux}(t) \; if \; P_{meca} \geq 0 \\ P_{meca}(t) * \eta + P_{aux}(t) \; if \; P_{meca} < 0 \end{cases}$$

where:

- $F(t, x, v)$ : force applied on the railway vehicle (11) expressed in newton,
- $v$ : speed of the railway vehicle (11) expressed in kilometer per hour,
- $x$ : position of the railway vehicle (11) expressed in kilometer,
- $t$ : time expressed in second,
- $M_s$ : static mass of the railway vehicle (11) expressed in kilogram,
- $M_r$ : rotative mass of the railway vehicle (11) expressed in kilogram,
- a : acceleration of the railway vehicle (11) expressed in meter per second squared,
- g : gravitational constant expressed in meter per second squared,
- $gradient(x)$ : altimetric profile of the line (4), (in per thousand)
- $RTM(v)$ : driving resistance to motion applied on the railway vehicle (11) expressed in newton,
- $P_{meca}(t)$ : mechanical power of the railway vehicle (11) expressed in watt,
- $P_{elec}(t)$ : electrical power of the railway vehicle (11) expressed in watt,
- $\eta$ : efficiency coefficient, and
- $P_{aux}(t)$ : auxiliary power of the railway vehicle (11) expressed in watt.

8. The method according to any one of the claims 1 to 7, wherein, during the step of calculating, one electrical power profile of one railway vehicle (11) is calculated, to obtain an electrical power profile reference, the other electrical power profile of the railway vehicles (11) being obtained by time-shifting the electrical power profile reference by a time offset, the time offset being the time interval between the railway vehicles (11) for which the electrical power profile is calculated and the railway vehicle (11) corresponding to the electrical power profile reference.

9. The method according to any one of the claims 1 to 8, wherein, during the step of deducing, the electrical power profile of each half-fleet (16, 18) is obtained by adding the electrical power profile of each railway vehicle (11) of each half-fleet (16, 18).

10. The method according to any one of the claims 1 to 9, wherein, during the step of optimizing, an optimisation variable is used to fulfil the criteria, the optimisation variable being the time shift between the electrical power profile of the first half-fleet (16) with respect to the electrical power profile of the second half-fleet (18).

11. The method according to the any one of the claims 1 to 10, wherein, during the step of optimizing, two criteria are fulfilled, the first criteria being the minimization of the energy consumption of the railway vehicles (1) and the second criteria being fulfilling operating constraints.

12. The method according to claim 11, wherein the minimization of the energy consumption of the railway vehicles (11) is carried out by minimizing the integral of the positive part of the deduced power profile of the whole fleet (10) over the headway.

13. A computer program product comprising a computer readable medium, having thereon a computer program comprising program instructions, the computer program being loadable into a processing unit and adapted to cause execution of a method according to any one of the claims 1 to 12 when the computer program is run by the parameter processing unit.

14. A computer readable medium having encoded thereon a computer program according to claim 13.

15. A controller (17) adapted to control a fleet (10) of railway vehicles (11) circulating along two tracks (2, 3) in a line (4) of a transport network (1), the railway vehicles (11) circulating on one track (2) forming a first half-fleet (16) and the railway vehicles (11) circulating on the other track (2) forming a second half-fleet (18), the controller (17) being adapted to:

- collect parameters, to obtain collected parameters, the collected parameters comprising at least one parameter relative to the transport network (1) and at least one operating parameter of the transport network (1) during an operation period of the fleet (10),
- calculate an electrical power profile of a railway vehicle (11) of the transport network (1) in function of the collected parameters, to obtain a calculated electrical power profile over the operation period for each railway vehicle (11), an electrical power profile being the temporal evolution of the electrical power over a time interval,
- deduce an electrical power profile of each half-fleet (16, 18) over a period, based on the calculated electrical power profiles, to obtain deduced electrical power profiles,
- optimize the starting times of each railway vehicle (11) circulating along the track to fulfill at least one criteria, one criteria being the minimization of the energy consumption of the railway vehicles (1) and implying the deduced electrical power profiles.

16. A transport network (1) comprising two railway tracks (2, 3), at least one railway vehicle (11) on each track, an electrical system (5) to supply the transport network (1) and a controller (17) according to claims 15.

## FIG.1

FIG.2

## FIG.3

FIG.4

FIG.5

FIG.6

FIG.7

Power of the first half-fleet [kW]
Power of the second half-fleet [kW]

FIG.8

FIG.9

Europäisches
Patentamt

European
Patent Office

Office européen
des brevets

## EUROPEAN SEARCH REPORT

**Application Number**

EP 24 30 5964

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOTTE MARILISA ET AL: "Performance Improvements of Traction Power Systems by Coordinating the Motion of a Fleet of Metro Trains in terms of Layover Time", 2021 IEEE VEHICLE POWER AND PROPULSION CONFERENCE (VPPC), IEEE, 25 October 2021 (2021-10-25), pages 1-6, XP034082898, DOI: 10.1109/VPPC53923.2021.9699303 [retrieved on 2022-01-31] * pages 1-6 * | 1-16 | INV. B60L15/32 B61L27/12 H02J3/00 |

-----

**TECHNICAL FIELDS SEARCHED (IPC)**

B60L
H02J
B61L

The present search report has been drawn up for all claims

| Place of search | Date of completion of the search | Examiner |
|---|---|---|
| The Hague | 7 November 2024 | Chevret, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3099553 A